# EUROPEAN PATENT APPLICATION

(11) **EP 3 885 865 A1**
(43) Date of publication of application: **29.09.2021**
(21) Application number: 18941089.7
(22) Date of filing: 23.11.2018
(51) Int. Cl.: G05D 1/00, G08G 1/123

(54) **CONTROL METHOD AND SYSTEM FOR INTELLIGENT DRIVING VEHICLE TO AUTOMATICALLY ENTER/EXIT STOP**

(71) Applicant: Hunan CRRC Times Electric Vehicle Co., Ltd, Zhuzhou, Hunan 412007 (CN)
(72) Inventor: PENG, Zhichuan, Zhuzhou, Hunan 412007 (CN); XIE, Yongbo, Zhuzhou, Hunan 412007 (CN); WANG, Wenming, Zhuzhou, Hunan 412007 (CN); ZHU, Tian, Zhuzhou, Hunan 412007 (CN); YI, Huibin, Zhuzhou, Hunan 412007 (CN); ZHAO, Pingan, Zhuzhou, Hunan 412007 (CN); LIU, Xiuyang, Zhuzhou, Hunan 412007 (CN); ZHANG, Zhiteng, Zhuzhou, Hunan 412007 (CN); ZHENG, Zhimin, Zhuzhou, Hunan 412007 (CN)
(74) Representative: Peters, Sebastian Martinus
(86) International application number: PCT/CN2018/117124
(87) International publication number: WO 2020/103120

(57) **Abstract**

An intelligent control system and method for controlling a vehicle to automatically enter/exit a stop. The intelligent control system comprises a vehicle intelligent driving system (104) installed on a vehicle, and a stop intelligent control system (102) installed at a stop. The vehicle intelligent driving system (104) can integrate positioning information and environment information provided by a sensing system (318) installed on the vehicle and a sensor system (204) installed at the stop, and cooperate with the stop intelligent control system (102) to enable the vehicle to enter/exit the stop automatically.

## Description

### TECHNICAL FIELD

The present invention relates to intelligent driving vehicles, and more specifically, to a control method and system for intelligent driving vehicles to automatically enter/exit platforms.

### BACKGROUND

In recent years, intelligent driving technology or autonomous driving technology applied to automobiles is gradually becoming the research and development trend of the automobile industry. The development of intelligent driving technology enables cars to provide drivers with more and more driving assistance, and the ultimate goal is to achieve fully autonomous driving. Intelligent driving technology can be used not only in small passenger vehicles, but also in various types of vehicles such as passenger cars (such as buses), trucks, and logistics vehicles.

Taking passenger cars as an example, passenger cars will inevitably go through entering/exiting platforms during operation, and so are intelligent driving passenger cars during operation. The intelligent driving passenger car involved in this article refers to a passenger car that has been retrofitted with an intelligent driving system on a traditional passenger car. For a specific environment such as a platform, the scenario is complex and changeable. The intelligent driving system must achieve the coordination of "people-vehicle-road" to ensure that the intelligent driving bus can accurately enter the platform, stop, have passengers get on and off, and exit the platform. During this period, the control must be precise, otherwise it will cause risks to the safety of passengers and vehicles.

Auxiliary technologies currently used on passenger cars mainly include door open/close assistance and platform warning systems. For example, a Chinese patent application (CN201810202194.1) describes a door control device for autonomous driving vehicles, which can detect whether there is someone at the door after the vehicle arrives at the platform, open the door if there is someone at the door and check whether it meets the requirements for closing the door after a period of delay.

A Chinese patent application (CN201220343048.9) describes a bus passenger door reminder system that uses a camera to identify passengers at the door.

A Chinese patent application (CN207790477U) describes a warning control system for roadside collision prevention when a bus arrives the platform, which can remind the driver of the operation to be performed by detecting the distance between the vehicle and the platform.

However, the above-mentioned prior art can only perform a specific function singly, and cannot realize the control of the vehicle to automatically enter and exit platforms or any designated parking areas.

### SUMMAR Y

The summary of the invention is provided to introduce some concepts that will be further described in the following specific embodiments in a simplified form. This summary is not intended to identify key features or essential features of the claimed subject matter, nor is it intended to be used to help determine the scope of the claimed subject matter.

According to an embodiment of the present invention, a method for controlling a vehicle to automatically enter a platform is provided, and the method comprises: determining a distance of the vehicle relative to the platform; comparing the distance with a preset enter platform threshold distance; in response to the distance being less than the preset enter platform threshold distance, determining whether enter platform conditions are met, wherein determining whether enter platform conditions are met includes determining, based on fusion of first environmental information sensed by a perception system of the vehicle and second environmental information provided by the platform, whether there is a physical object that hinders the vehicle from entering the platform; and in response to determining that the enter platform conditions are met, automatically controlling the vehicle to enter the platform and stop in the designated parking area based on fusion of real-time first positioning information provided by the perception system of the vehicle and real-time second positioning information provided by the platform, as well as fusion of real-time first environmental information sensed by the perception system of the vehicle and real-time second environmental information provided by the platform.

According to another embodiment of the present invention, a method for controlling a vehicle to automatically exit a platform is provided, and the method comprises: obtaining a fused real-time vehicle position based on both real-time first positioning information provided by a perception system of the vehicle and real-time second positioning information provided by the platform; obtaining fused real-time environmental information around the vehicle based on both real-time first environmental information sensed by the perception system of the vehicle and real-time second environmental information provided by the platform; determining whether exit platform conditions are met, including determining whether there is a physical object that hinders the vehicle from exiting the platform based on the fused real-time environmental information; and in response to determining that the exit platform conditions are met, automatically controlling the vehicle to exit the platform based on both the fused real-time vehicle position and the fused real-time environmental information.

According to another embodiment of the present invention, an intelligent driving vehicle capable of automatically entering and exiting a platform is provided, and the vehicle includes: a perception system composed of one or more sensors, the perception system being configured to provide real-time first positioning information of the vehicle and real-time first environmental information around the vehicle; a vehicle controller, the vehicle controller being configured to control at least a door control module, an electronic control driving module, an electronic control braking module, and an electronic control steering module of the vehicle to realize door opening and closing, vehicle driving, vehicle braking, and vehicle steering, respectively; and a vehicle intelligent driving system, the vehicle intelligent driving system includes: a perception system controller, the perception system controller being configured to receive the first positioning information and the first environment information provided by the perception system; a wireless communication device, the wireless communication device being configured to receive, from the platform, second positioning information about the vehicle and real-time second environmental information around the platform; and a decision controller, the decision controller being configured to: receive the first positioning information and the first environment information from the perception system controller; receive the second positioning information and the second environment information from the wireless communication device; decide whether enter platform conditions or exit platform conditions are met based on the first positioning information, the second positioning information, the first environmental information, and the second environmental information; in response to that the enter platform conditions or the exit platform conditions are met, sending corresponding instructions to the vehicle controller to automatically control the vehicle to enter or exit the platform.

According to yet another embodiment of the present invention, a platform intelligent control system is provided, and the platform intelligent control system includes: a sensor system, the sensor system including at least a millimeter wave radar, a smart camera and a plurality of infrared signal detectors, wherein: the signals sensed by the millimeter wave radar and the smart camera are fused at a target level to generate environmental information around the platform, and the plurality of infrared signal detectors are installed at different positions in the platform, and are configured to provide vehicles going to enter and exit the platform with distance information indicating the distance between the vehicle and the platform; and a platform intelligent controller communicatively coupled with the sensor system, the platform intelligent controller being configured to: wirelessly communicate with the intelligent driving system of the vehicle to send the environmental information, the distance information, and the platform status information of the platform to the vehicle; and wirelessly receive vehicle status information of the vehicle from the intelligent driving system of the vehicle.

According to yet another embodiment of the present invention, an intelligent driving vehicle control system, and it includes: the vehicle intelligent driving system according to the present invention installed on the vehicle; and the platform intelligent control system according to the present invention installed at the platform, wherein the vehicle intelligent driving system and the platform intelligent control system are configured to work in cooperation with each other to control the vehicle to automatically enter and exit the platform by executing the method according to the present invention.

The intelligent driving system of the present invention at least solves the following problems:
1. When a bus is approaching a platform, the intelligent driving system of the present invention can make a judgment based on the current road conditions and work out the best position, vehicle speed, driving route, or the like, for entering the platform;
2. When the bus is about to arrive near the parking point, the intelligent driving system of the present invention can adjust itself, stop precisely at the platform position, and make the lateral and vertical deviations within a certain range;
3. After the bus arrives at the platform, the intelligent driving system of the present invention can detect the surrounding environment and open and close the door when permitted, without affecting the safety of vehicles and people;
4. When the bus leaves the platform, the intelligent driving system of the present invention can make a judgment based on the current road conditions, work out the best position, vehicle speed, driving route, or the like, for exiting the platform, and resume normal operation statuses.

These and other features and advantages will become apparent by reading the following detailed description and referring to the associated drawings. It should be understood that the foregoing general description and the following detailed description are only illustrative, and will not limit the claimed aspects.

### BRIEF DESCRIPTION OF THE DRAWINGS

In order to understand in detail the manner in which the above-mentioned features of the present invention are used, the content briefly summarized above may be described in more detail with reference to various embodiments, some of which are shown in the accompanying drawings. It should be noted, however, that the drawings only show some typical aspects of the present invention, and should not be considered as limiting its scope, because the description may allow other equally effective aspects.
Fig. 1 is a structural block diagram of a control system for an intelligent driving vehicle according to an embodiment of the present invention.
Fig. 2 is a structural block diagram of a platform intelligent control system according to an embodiment of the present invention.
Fig. 3 shows an architecture diagram of a vehicle intelligent driving system according to an embodiment of the present invention.
Fig. 4 is a flowchart of a method for controlling a vehicle to automatically enter a platform according to an embodiment of the present invention.
Fig. 5 is a flowchart of a method for controlling a vehicle to automatically exit a platform according to an embodiment of the present invention.

### DETAILED DESCRIPTION

The present invention will be described in detail below in conjunction with the accompanying drawings, and the features of the present invention will be further revealed in the following detailed description.

In this description, "vehicles" refers generally to any type of powered non-track-carrying vehicles, including small passenger cars (sedans), buses, trucks, vans, etc. For ease of description, this specification uses "passenger cars" (more specifically, "buses") as the context to describe the automatic entry and exit platform technology for intelligent driving vehicles of the present invention. "Passenger car" generally refers to a commercial vehicle that takes a plurality of people (usually more than 9 people, including the driver's seat), generally has a square compartment, and is used to carry passengers and their luggage. This type of vehicle is mainly used for public transportation and group transportation. Passenger cars used for public transportation are also called "buses". However, those skilled in the art should understand that "passenger cars" also include vehicles other than "buses", such as touring buses, school buses, etc., and are independent from the actual size, number of passengers, and operating status of the vehicle. Therefore, unless otherwise specified, the features described in conjunction with "bus" in this specification can be universally applied to any type of passenger cars. In addition, for the convenience of description, the intelligent driving vehicles are sometimes referred to simply as "cars" or "vehicles" in this specification.

In addition, after reading the present invention, those skilled in the art should also understand that the automatic entry and exit platform technology for intelligent driving vehicles of the present invention is not only applicable to passenger cars, but also applicable to any other types of vehicles. Correspondingly, "platforms" include not only platforms for traditional buses and passenger cars, but also cargo loading and unloading areas, parking places, and any other facilities that can be set up with designated parking areas.

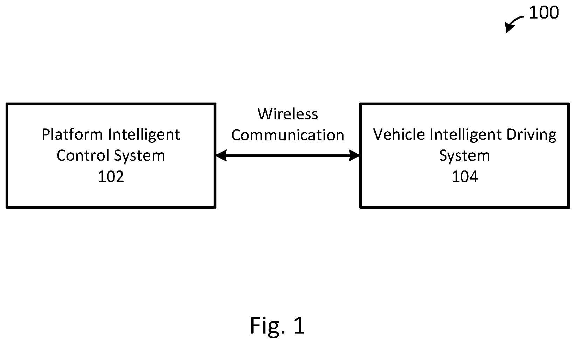

Fig. 1 is a structural block diagram of a control system 100 for an intelligent driving vehicle according to an embodiment of the present invention. As shown in FIG. 1, the control system 100 for intelligent driving vehicles of the present invention can be divided into two parts, namely a platform intelligent control system 102 and a vehicle intelligent driving system 104. The platform intelligent control system 102 can be installed at a platform, and the vehicle intelligent driving system 104 can be installed on a vehicle. The platform intelligent control system 102 and the vehicle intelligent driving system 104 can communicate through various wireless communication methods. Wireless communication methods can include, but are not limited to, cellular signal communication (GSM, GPRS, CDMA, 4G LTE, etc.), short-range radio frequency communication (2.4G, 5G, etc.), and any other existing or future wireless communication technologies applicable to wireless communication. In addition, the platform intelligent control system 102 and the vehicle intelligent driving system 104 can also communicate with a remote vehicle information management center/dispatch center (not shown) in a wireless/wired manner, and can communicate indirectly via the vehicle information management center/dispatch center. The specific structures and working modes of the platform intelligent control system 102 and the vehicle intelligent driving system 104 will be described in more detail in the following description.

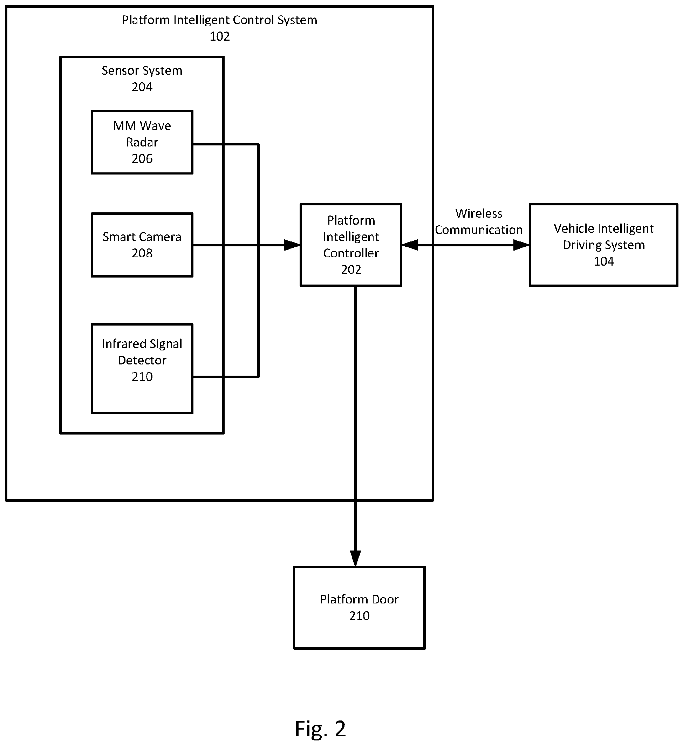

Fig. 2 is a structural block diagram of a platform intelligent control system 102 according to an embodiment of the present invention. The platform intelligent control system 102 can be installed on any existing platform. All or part of the platform equipped with the platform intelligent control system of the present invention can therefore also be called "intelligent platform". Those skilled in the art can understand that non-intelligent transportation vehicles can also use such intelligent platforms. The difference between intelligent platforms and existing platforms is that the intelligent platforms are equipped with the platform intelligent control system 102.As shown in FIG. 2, the platform intelligent control system 102 includes a platform intelligent controller 202 and a sensor system 204.The sensor system 204 includes a plurality of sensors, including but not limited to millimeter wave radar(s) 206, smart camera(s) 208, infrared signal detector(s) 210, etc. The station intelligent controller 202 can receive sensor information from various sensors in a wired or wireless manner.

Both the millimeter wave radar(s) 206 and the smart camera(s) 208 can detect obstacles. The millimeter wave radar(s) 206 has an advantage in identifying objects such as stationary targets and metals, while the smart camera(s) 208 has an advantage in identifying objects such as moving and nearby pedestrians. According to an embodiment of the present invention, the platform intelligent controller 202 can perform target-level fusion on the millimeter wave radar 206 and the intelligent camera 208, so that the accuracy of detecting physical objects is greatly improved, and the omission ratio is small. According to an embodiment of the present invention, the millimeter wave radar(s) 206 and the smart camera(s) 208 can be mainly used to detect the following information:
1) Before the vehicle enters, whether there are other physical objects outside the platform that affect the entry of the vehicle, such as pedestrians, vehicles, stationary obstacles, etc.;
2) After the vehicle stops at the platform, detect whether the passengers at the platform have finished getting on and off, and whether there are physical objects that affect the vehicle to start leaving;
3) Before the vehicle is ready to leave the platform, check the traffic conditions around the vehicle, such as whether there is an obstructive physical object, and whether the vehicle has the conditions to leave the platform; and
4) During the entire process from the vehicle entering the platform to exiting the platform, provide the vehicle with positioning information to ensure that the vehicle can be precisely controlled.

The infrared detection signals can be mainly used to measure the distance between the vehicle and the platform. In order to locate the position of the vehicle more precisely, a plurality of infrared signal detectors 210 may be installed at the platform. For example, an infrared signal detector 210 may be installed for every certain distance along a straight line at the platform. By sending distance information between the vehicle and the platform detected by the infrared detection signals installed at different positions to the vehicle intelligent driving system 104, the vehicle intelligent driving system 104 can calculate the angle between the vehicle and the platform.

In order to further accurately locate the position of the vehicle relative to the station, the infrared detection signals can be fused and redundantly processed with the GPS information and the information from the millimeter wave radars 206 and the smart cameras 208 in the platform, so as to more precisely control the vehicle to enter, stop, and exit the platform, and thus ensuring the safety of vehicles entering and exiting the platform.

The platform intelligent controller 202 can communicate with the vehicle intelligent driving system 104 through wireless signals, sending the platform status information to the vehicle intelligent driving system 104 for vehicle decision control. The platform status information may include, but is not limited to, physical object information near the platform, door open conditions, dangerous situations, vehicle positioning information, etc. The platform intelligent controller 202 can also receive the vehicle status information fed back from the vehicle intelligent driving system 104.The vehicle status information may include, but is not limited to, the door open status of the vehicle, vehicle enter platform reminders, vehicle start reminders, vehicle exit platform reminder, etc.

In addition, as a non-limiting example, the platform may also be provided with a platform door 212 that can be automatically opened and closed in a controlled manner. In the case where a platform door 212 is provided, the platform intelligent controller 202 may control the opening and closing of the platform door 212 based on various sensor information and information received from the vehicle intelligent driving system 104.

In the case where the platform is provided with a platform door 212, the platform intelligent controller 202 can determine whether to open or close the door based on the platform status information and the vehicle status information, and send corresponding instructions to the platform door 212 to perform the opening and closing operations of the platform door, for example:
1. In the process of a vehicle entering the platform, the door can be opened after the vehicle has stopped at the designated position and it is detected to be safe (for example, it is determined that there is no passenger in the no-standing area in front of the platform door), and the open and closed status of the platform door will be sent to vehicle;
2. In the process of a vehicle exiting the platform, after the vehicle door is closed and it is detected that there is no passenger or other obstacle at the platform door, the platform door is closed.

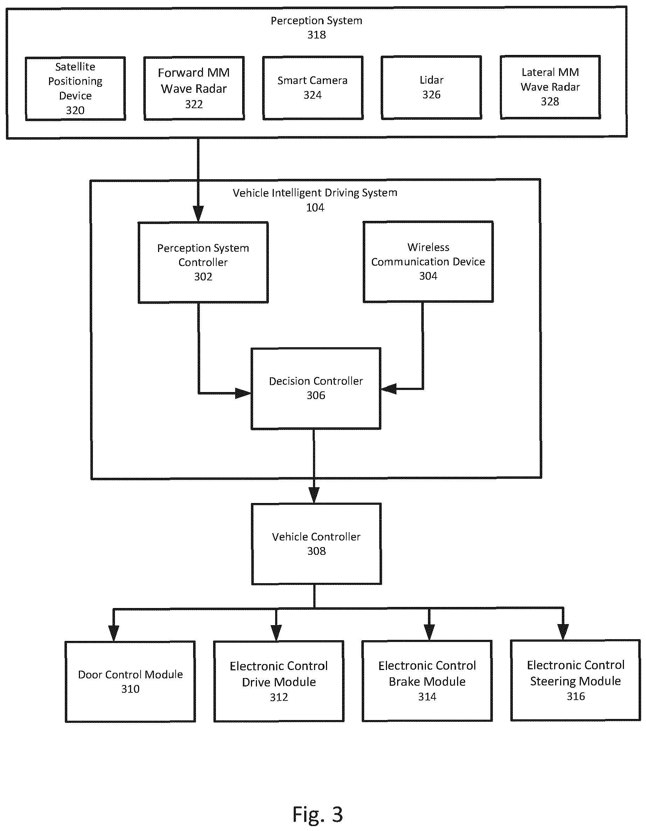

Fig. 3 shows an architecture diagram of a vehicle intelligent driving system 104 according to an embodiment of the present invention. As shown in FIG. 3, the vehicle intelligent driving system 104 includes a perception system controller 302, a wireless communication device 304, and a decision controller 306.The perception system controller 302 receives sensor information provided by various sensors of the perception system 318 of the vehicle. The sensors included in the perception system 318 may include, but are not limited to, satellite positioning device(s) 320 (such as GPS, BEIDOU, GALILEO, GLONASS, etc.), forward millimeter wave radar(s) 322, smart camera(s) 324, Lidar(s) (SLAM) 326, lateral millimeter wave radar(s) 328 and so on. Sensors can not only output raw sensing data, but also processed information by some sensors. For example, the smart camera(s) 324 may identify objects, in the captured images it outputs, that have been recognized by the smart camera (s) 324, such as vehicles, pedestrians, etc. Similarly, both the millimeter wave radar (s) 322 and the Lidar(s) 324 may have certain capabilities of object identification. The perception system controller 302 can thus fuse the information provided by various sensors, and send the fused data to the decision controller 306 to inform the current statuses of the vehicle, the physical objects in front of and around the vehicle, and the position of the vehicle in the current environment obtained by the Lidar SLAM.

The wireless communication device(s) 304 may be responsible for wireless communication with the platform and/or a remote vehicle information management center/dispatch center. For example, as mentioned before, the wireless communication device(s) 304 may receive platform status information from the platform intelligent control system 102 and feed back vehicle status information to it. The platform status information can then be provided to the decision controller 306.The decision controller 306 receives the information provided by the perception system controller 302 and the wireless communication device(s) 304, and integrates these information to plan the route of the vehicle. The decision controller 306 can then, based on the planned route, send corresponding target vehicle speed, target steering wheel angle, target deceleration, and information about action to be performed by the vehicle door to the vehicle controller unit (VCU) 308, and the VCU 308 sends instructions to various actuators on the vehicle. The actuator may include, but is not limited to, a door control module 310, an electronic control drive module 312, an electronic control brake module 314, an electronic control steering module 316, and other actuators for controlling other hardware devices on the vehicle. The VCU 308 can send corresponding instructions to these actuators to implement actions such as electronically controlled driving, braking, steering, and opening or closing doors.

The decision controller 306 can also detect in real time the operating statuses and fault statuses provided by the perception system and the platform intelligent control system. In the event of a fault, the decision controller 306 can promptly notify the safety officer in the vehicle (the driver or other personnel who are specifically responsible for the safety of the driving process), and control the parking of the vehicle, and then the safety officer can perform manual intervention operations.

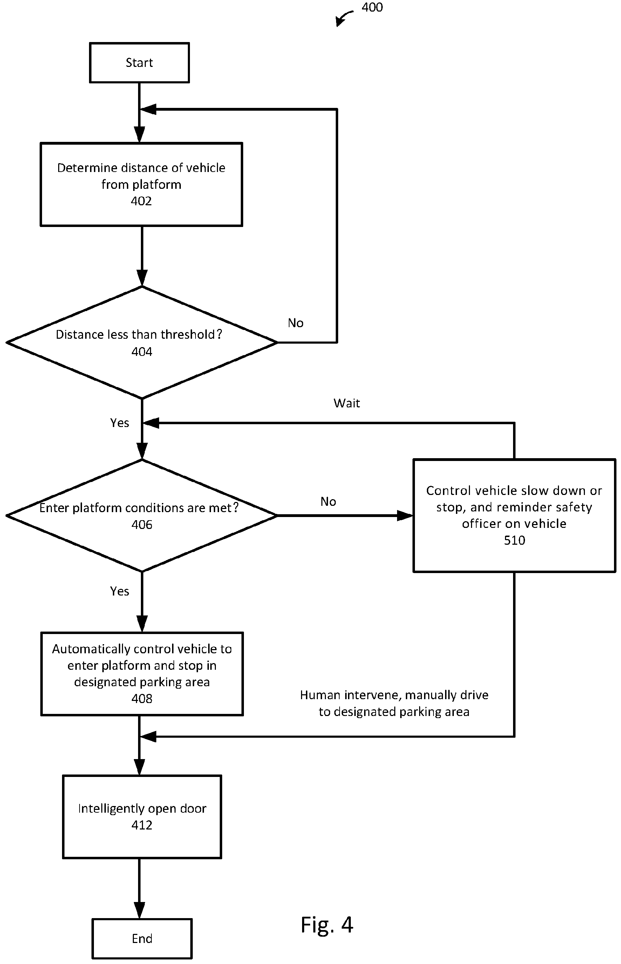

Fig. 4 is a flowchart of a method 400 for controlling a vehicle to automatically enter a platform according to an embodiment of the present invention.

The method 400 starts at step 402, where the vehicle determines its distance from the platform. As aforementioned, the decision controller 306 may receive the positioning information provided by the perception system 318 (for example, the position coordinates provided by the satellite positioning device(s) 320).Thereafter, the decision controller 306 may calculate the current distance of the vehicle from the platform based on this positioning information and the platform position (for example, position coordinates) known in advance or received from the platform.

Subsequently, at step 404, the decision controller 306 may compare the current distance with a preset enter platform threshold distance. For example, the enter platform threshold distance can be set as the longitudinal distance from a designated enter platform spot being 10 meters. When the current distance is less than or equal to the enter platform threshold, the process proceeds to step 406; otherwise, the process returns to step 402.

At step 406, the decision controller may determine whether enter platform conditions are met. More specifically, the vehicle can fuse the environmental information detected and identified by the on-board perception system with the information received from the platform intelligent control system to more accurately determine whether there are physical objects near the vehicle (especially between the vehicle and the platform) (physical objects include but are not limited to other motor vehicles, non-motor vehicles, pedestrians, animals, stationary obstacles, etc.), and determine whether these objects will cause the vehicle to be unable to enter the platform. It can be understood that, in addition to the obstructive physical objects, the enter platform conditions can also include any other conditions or factors for determining whether a vehicle needs or is allowed to enter the platform, such as the platform/dispatch center issuing an instruction prohibiting the entry of the vehicle, there is no passenger on the vehicle and at the platform to get on and get off, etc. When it is determined that the enter platform conditions are met, the process proceeds to step 408.

At step 408, the vehicle starts to perform an automatic enter platform process to control the vehicle to automatically enter the platform and stop in a designated area. More specifically, according to an embodiment of the present invention, the automatic enter platform process may include the decision controller 306 determining a target parking area according to the platform status information received from the platform intelligent control system, and calculating in real time a route plane for the vehicle to enter the platform based on the current vehicle position. The real-time position of the vehicle at this time can be more precisely determined based on the positioning information provided by the perception system 318 of the vehicle (for example, the position coordinates provided by the satellite positioning device(s) 320) and the positioning information received from the platform intelligent control system through the wireless communication device(s) 304 (for example, the infrared measurement information).Route planning includes the vehicle driving route from the current location to the target parking location, the vehicle speed statuses of the entire route, and the corresponding vehicle driving actions (including driving, braking, and steering, etc.).Subsequently, the decision controller sends the determined driving, braking and steering in the form of instructions to the vehicle controller 308 of the vehicle. The vehicle controller 308 then controls the electronic control steering module 312, the electronic control drive module 314, and the electric control brake module 316 to perform corresponding vehicle driving actions. During the entire enter platform process, the decision controller 306 continues to perform the aforementioned information fusion to accurately locate the real-time position of the vehicle and identify physical objects near the vehicle, and adjust the driving route and vehicle control in real time as needed until the vehicle stops accurately in the designated parking area. Through the combination of the infrared detection of the platform and the satellite positioning of the vehicle in the present invention, the accuracy of controlling the parking position can be realized that both the lateral and vertical distance deviances are controlled within a certain range. In addition, platforms can generally be divided into ordinary platforms and harbor-style platforms, so corresponding driving routes can be set for these two types of platforms.

For ordinary platforms, the vehicle may already be in the lane close to the platform before entering the platform. Therefore, planning the route may only need to adjust the speed and braking force to ensure that the vehicle can stop in the designated area. For harbor-style platforms, planning the route further includes controlling the vehicle to steer into the harbor, and finally parallel to the platform and stop at the designated position. Subsequently, the process proceeds to step 412.

Returning to step 406, when it is determined that the enter platform conditions are not met, the process proceeds to step 410.At step 410, the decision controller may issue instructions to the vehicle controller 308 to control the vehicle to slow down or stop, and remind the safety officer in the vehicle (for example, via the voice system and/or the dashboard system) of the current traffic conditions, and the safety officer decides whether to wait for the obstructive physical objects to leave or manually intervene to control the vehicle to enter the platform. If it is decided to wait for the obstructive physical objects to leave and thereafter continue the automatic entering platform, the process returns to step 406 to re-determine in real time whether the vehicle meets the enter platform condition. If it is decided to manually intervene, the system switches to manual driving until the vehicle stops in the designated parking area, and the process proceeds to step 412.

After the vehicle has stopped in the designated parking area, at step 412, the vehicle can intelligently control to open the door. According to an embodiment of the present invention, the perception system 318 can detect in real time the information of objects within a certain range of the vehicle door, and inform the decision controller 306 whether there are passengers in the door area currently ready to get off the car, or whether there is any situation that is not suitable for opening the door, such as there is a passenger leaning on the door. In addition, the decision controller 306 also receives real-time platform status information from the intelligent platform control system, including whether there are passengers at the platform waiting to get on or whether there is any situation at the platform side that is not suitable for opening the door. If there are passengers ready to get off or get on and there is no other situation that is not suitable for opening the door, the decision controller 306 can send a door open instruction to the vehicle controller 308, and the vehicle controller 308 in turn instructs the door control module 310 to open the door. As another implementation, after the vehicle is stopped, the decision controller 306 may instruct the vehicle controller 308 to open the door, regardless of whether there are passengers ready to get on or off.

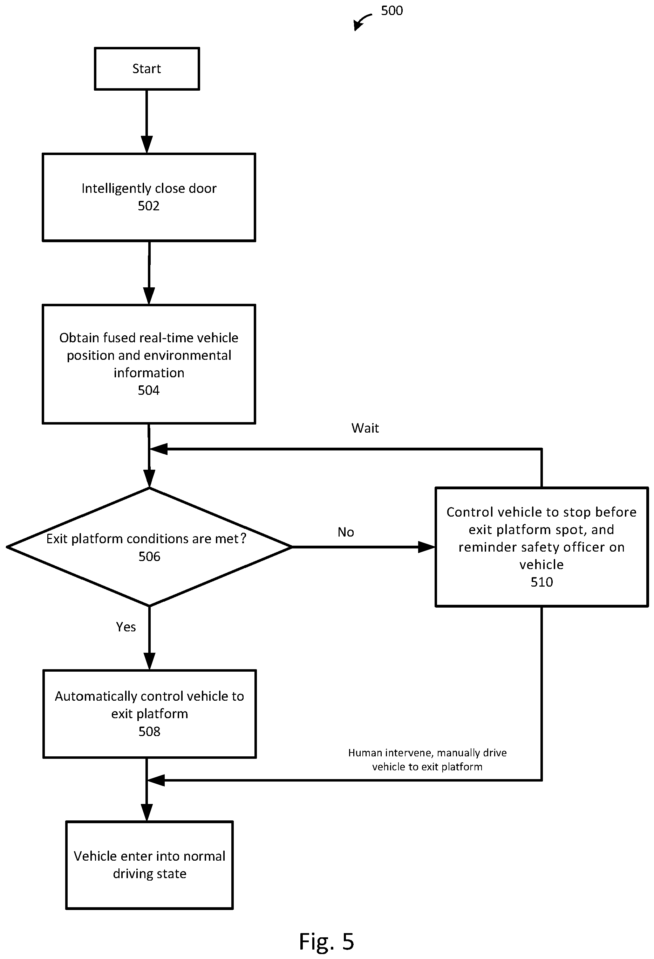

Fig. 5 is a flowchart of a method 500 for controlling a vehicle to automatically exit a platform according to an embodiment of the present invention.

The method 502 starts at step 502, where the vehicle can intelligently control the door to be closed. According to an embodiment of the present invention, the perception system 318 can detect and inform whether there are passengers within a certain range of the vehicle door, for example, there are passengers who are about to get off the vehicle or passengers who have just got on but have not completely entered the vehicle, and meanwhile the sensor system 204 of the platform intelligent control system 102 can detect whether there are passengers at the platform and outside the vehicle door to get on the vehicle. When the decision controller 306 determines, based on the information from the perception system 318 of the vehicle and the information from the sensor system 204 of the platform intelligent control system 102, that no passenger is ready to get off and no passenger at the platform is ready to get on, and there is no passenger near the door for a predetermined time or when the planned departure time is reached, the decision controller 306 may instruct the vehicle controller 308 to close the door. Subsequently, the process proceeds to step 504.

At step 504, similar to the enter platform process, the decision controller 306 can obtain the fused real-time vehicle position based on both the real-time positioning information from the perception system 402 of the vehicle and the real-time second positioning information provided by the platform, and can obtain, based on the real-time environment information sensed by the perception system 402 and the real-time environment information provided by the platform, the fused real-time environment information around the vehicle, and thereby detecting the physical object information around the vehicle and the platform. Subsequently, at step 506, the decision controller 306 may determine whether the exit platform conditions are met. For example, the decision controller 306 may determine whether there is a physical object that hinders the vehicle from exiting the platform. When the exit platform conditions are met, the process proceeds to step 508.

It should be appreciated that the sequence of step 502 of intelligently closing the door and step 504 of obtaining real-time positioning information and environmental information is arbitrary, and can also be performed simultaneously. For example, the operation of obtaining real-time positioning information and environmental information can continue from the time the vehicle enters the platform. In addition, in the case that the vehicle does not open the door because there is no passenger getting on and off during this enter platform process, the step 502 of intelligently closing the door can be skipped. Instead, the previous process of intelligently opening the door can be maintained, that is, keep detecting whether there is any passenger to get on or off in order to open the door.

At step 508, the decision controller 306 may automatically control the vehicle to exit the platform based on both the fused real-time vehicle position and the fused real-time environmental information. For example, the decision controller 306 may calculate an exit platform route plan based on the real-time vehicle position and environmental information, and control the vehicle to drive out of the platform accordingly. As an example, the exit platform route for the vehicle may include going straight for a certain distance (for example, first going straight to a preset exit platform spot), then changing lane outwardly, and entering normal driving state of the vehicle after the lane change is completed. When exiting the platform according to this mode, when the vehicle is within a certain distance (for example, within 1 meter) from the preset exit platform spot, the vehicle determines, by fusing the physical object information in front of the vehicle transmitted from the perception system and the platform intelligent controller, whether to exit the platform at the exit platform spot.

Returning to step 506, when it is determined that the exit platform conditions are not met, for example, when it is determined that there is a physical object hinders the vehicle from exiting the platform, the process proceeds to step 510.At step 510, the decision controller 306 can control the vehicle to stop before the exit platform spot, and remind the safety officer in the vehicle of the current traffic conditions, and the safety officer decides whether to wait for the obstructive entity to leave or manually intervene to control the vehicle to exit the platform. After completing the exit platform process, the vehicle enters a normal driving state.

The above describes the control method and system for the intelligent driving vehicle to enter and exit the platform automatically according to the present invention. The control method realizes the vehicle automatic entering and exiting platform through the cooperation of the intelligent control systems of the platform and the vehicle, and ensures the reliability, accuracy and safety of the entire process of entering and exiting the platform. The platform intelligent control system provided by the present invention may include an intelligent controller, millimeter wave radar, infrared detector, and intelligent camera, which can provide the vehicle decision controller with information about physical objects near the platform and the position of passengers in front of the platform door, and provide the intelligent driving vehicle with relative position information of physical objects and the platform. In addition, it can intelligently recognize whether the platform door can be opened and closed in the current statuses according to the conditions in front of the platform door at the platform and the position of the vehicle.

The vehicle intelligent driving system provided by the present invention can receive and fuse the perception sensor information from the vehicle and the information from the platform intelligent control system, and perform the functions of intelligent driving in and out of the car, intelligent door opening and closing, and fault diagnosis, and ensure the safety of the vehicle and the passengers when the vehicle enters and exits the platform.

In addition, as those skilled in the art can understand, the automatic enter and exit platform technology for intelligent driving vehicles of the present invention can also be applied to any other types of vehicles.

For example, the system of the present invention can be applied to trucks and vans in logistics transportation and cargo loading and unloading scenarios.

The vehicle intelligent driving system can be installed on a truck or a van, and the platform intelligent control system can be installed in areas like warehouses and cargo loading/unloading areas, and thus achieving similar control of trucks or vans automatically entering and exiting the cargo loading/unloading areas.

In addition, the detection of passengers getting on and off the vehicle and the opening and closing control of the door can be similarly applied to the detection of cargo loading and the opening and closing control of the cargo door.

The vehicle intelligent driving system of the present invention can also be installed on small passenger cars such as sedans, and the platform intelligent control system can be installed in garages, roadside parking spaces, etc., so as to realize the automatic driving of cars in and out of parking spaces.

What has been described above includes examples of aspects of the claimed subject matter. Of course, it is impossible to describe every conceivable combination of components or methods for the purpose of describing the claimed subject matter, but those of ordinary skill in the art should recognize that there are many further combinations and permutations of the claimed subject matter are all possible. Thus, the disclosed subject matter is intended to cover all such changes, modifications and changes that fall within the spirit and scope of the appended claims.

## Claims

1. A method for controlling a vehicle to automatically enter a platform, **characterized in that** the method comprises:
determining a distance of the vehicle relative to the platform;
comparing the distance with a preset enter platform threshold distance;
in response to the distance being less than the preset enter platform threshold distance, determining whether enter platform conditions are met, wherein determining whether enter platform conditions are met includes determining, based on fusion of first environmental information sensed by a perception system of the vehicle and second environmental information provided by the platform, whether there is a physical object that hinders the vehicle from entering the platform; and
in response to determining that the enter platform conditions are met, automatically controlling the vehicle to enter the platform and stop in the designated parking area based on fusion of real-time first positioning information provided by the perception system of the vehicle and real-time second positioning information provided by the platform, as well as fusion of real-time first environmental information sensed by the perception system of the vehicle and real-time second environmental information provided by the platform.

2. The method of claim 1, **characterized in that** the first positioning information is vehicle positioning information provided by a satellite positioning device of the vehicle, and the second positioning information is distance information provided by an infrared signal detector of the platform indicating the distance between the vehicle and the platform.

3. The method of claim 2, **characterized in that** determining the distance of the vehicle relative to the platform comprises calculating the distance of the vehicle relative to the platform based on the first positioning information and the position of the platform.

4. The method of claim 1, **characterized in that** the physical object comprises at least one of the following:
motor vehicles, non-motor vehicles, pedestrians, animals, or stationary obstacles.

5. The method of claim 2, **characterized in that** automatically controlling the vehicle to enter the platform further comprises:
calculating a route plan for the vehicle to enter the platform based on the fused real-time vehicle position and the designated parking area of the platform;
performing corresponding vehicle driving actions according to the route plan; and
adjusting the route plan based on both the fused real-time vehicle position and the fused real-time environmental information.

6. The method of claim 5, **characterized in that** the fused real-time vehicle position includes an angle between the vehicle and the platform calculated by using the second positioning information.

7. The method according to claim 5, **characterized in that** the route plan at least includes:
a vehicle driving route from a current position of the vehicle to a target parking position;
vehicle speed statuses associated with the vehicle driving route; and
vehicle driving actions associated with the vehicle driving route, wherein the vehicle driving actions include one or more of vehicle driving, braking, and steering.

8. The method of claim 1, **characterized in that**, it further comprises:
determining whether to open the door based on both real-time information provided by the perception system of the vehicle and real-time information received from the platform.

9. The method of claim 8, **characterized in that**, it further comprises:
when it is determined based on the real-time information provided by the perception system of the vehicle and the real-time information received from the platform that there are passengers on the vehicle ready to get off or there are passengers at the platform waiting to get on, controlling the vehicle to automatically open the door; and
when it is determined based on the real-time information provided by the perception system of the vehicle and the real-time information received from the platform that there is a situation that is not suitable for opening the door, controlling the vehicle not to open the door.

10. A method for controlling a vehicle to automatically exit a platform, **characterized in that** the method comprises:
obtaining a fused real-time vehicle position based on both real-time first positioning information provided by a perception system of the vehicle and real-time second positioning information provided by the platform;
obtaining fused real-time environmental information around the vehicle based on both real-time first environmental information sensed by the perception system of the vehicle and real-time second environmental information provided by the platform;
determining whether exit platform conditions are met, including determining whether there is a physical object that hinders the vehicle from exiting the platform based on the fused real-time environmental information; and
in response to determining that the exit platform conditions are met, automatically controlling the vehicle to exit the platform based on both the fused real-time vehicle position and the fused real-time environmental information.

11. The method of claim 10, **characterized in that** the first positioning information is vehicle positioning information provided by a satellite positioning device of the vehicle, and the second positioning information is distance information provided by an infrared signal detector in the platform indicating the distance between the vehicle and the platform.

12. The method of claim 9, **characterized in that** the physical object comprises at least one of the following:
motor vehicles, non-motor vehicles, pedestrians, animals, or stationary obstacles.

13. The method of claim 9, **characterized in that** automatically controlling the vehicle to exit the platform further comprises:
calculating a route plan for the vehicle to exit the platform based on the fused real-time vehicle location and a designated exit platform spot of the platform;
performing corresponding vehicle driving actions according to the route plan; and
adjusting the route plan based on both the fused real-time vehicle position and the fused real-time environmental information.

14. The method according to claim 13, **characterized in that** the route plan at least includes:
a vehicle driving route from a current position of the vehicle to a target parking position;
vehicle speed statuses associated with the vehicle driving route; and
vehicle driving actions associated with the vehicle driving route, wherein the vehicle driving actions include one or more of vehicle driving, braking, and steering.

15. The method of claim 9, **characterized in that**, it further comprises:
before the vehicle starts to exit the platform, determining whether to close the door based on both real-time information provided by the perception system of the vehicle and real-time information received from the platform.

16. The method of claim 15, **characterized in that**, it further comprises:
when it is determined based on the real-time information provided by the perception system of the vehicle and the real-time information received from the platform that there is no passenger on the vehicle ready to get off and no passenger at the platform ready to get on, and there is no passenger near the door for a predetermined time period, controlling the vehicle to automatically close the door.

17. An intelligent driving vehicle capable of automatically entering and exiting a platform, **characterized in that** the vehicle includes:
a perception system composed of one or more sensors, the perception system being configured to provide real-time first positioning information of the vehicle and real-time first environmental information around the vehicle;
a vehicle controller, the vehicle controller being configured to control at least a door control module, an electronic control driving module, an electronic control braking module, and an electronic control steering module of the vehicle to realize door opening and closing, vehicle driving, vehicle braking, and vehicle steering, respectively; and
a vehicle intelligent driving system, the vehicle intelligent driving system includes:
a perception system controller, the perception system controller being configured to receive the first positioning information and the first environment information provided by the perception system;
a wireless communication device, the wireless communication device being configured to receive, from the platform, second positioning information about the vehicle and real-time second environmental information around the platform; and
a decision controller, the decision controller being configured to:
receive the first positioning information and the first environment information from the perception system controller;
receive the second positioning information and the second environment information from the wireless communication device;
decide whether enter platform conditions or exit platform conditions are met based on the first positioning information, the second positioning information, the first environmental information, and the second environmental information;
in response to that the enter platform conditions or the exit platform conditions are met, send corresponding instructions to the vehicle controller to automatically control the vehicle to enter or exit the platform.

18. The vehicle of claim 17, **characterized in that** the decision controller is further configured to, when preparing to enter the platform:
determine a distance of the vehicle relative to the platform;
compare the distance with a preset enter platform threshold distance;
in response to the distance being less than the preset enter platform threshold distance, determine whether enter platform conditions are met, wherein determining whether enter platform conditions are met includes determining, based on fusion of first environmental information sensed by a perception system of the vehicle and second environmental information provided by the platform, whether there is a physical object that hinders the vehicle from entering the platform; and
in response to determining that the enter platform conditions are met, automatically control the vehicle to enter the platform and stop in the designated parking area based on fusion of real-time first positioning information provided by the perception system of the vehicle and real-time second positioning information provided by the platform, as well as fusion of real-time first environmental information sensed by the perception system of the vehicle and real-time second environmental information provided by the platform.

19. The vehicle of claim 18, **characterized in that** automatically controlling the vehicle to enter the platform further comprises:
calculating a route plan for the vehicle to enter the platform based on fused real-time vehicle position and the designated parking area of the platform;
performing corresponding vehicle driving actions according to the route plan; and
adjusting the route plan based on both the fused real-time vehicle position and the fused real-time environmental information.

20. The vehicle according to claim 19, **characterized in that** the route plan at least includes:
a vehicle driving route from a current position of the vehicle to a target parking position;
vehicle speed statuses associated with the vehicle driving route; and
vehicle driving actions associated with the vehicle driving route, wherein the vehicle driving actions include one or more of vehicle driving, braking, and steering.

21. The vehicle of claim 17, **characterized in that** the decision controller is further configured to:
determine whether to open the door based on both real-time information provided by the perception system of the vehicle and real-time information received from the platform.

22. The vehicle of claim 21, **characterized in that** the decision controller is further configured to:
when it is determined based on the real-time information provided by the perception system of the vehicle and the real-time information received from the platform that there are passengers on the vehicle ready to get off or there are passengers at the platform waiting to get on, instruct the vehicle controller to automatically open the door; and
when it is determined based on the real-time information provided by the perception system of the vehicle and the real-time information received from the platform that there is a situation that is not suitable for opening the door, instruct the vehicle controller not to open the door.

23. The vehicle of claim 17, **characterized in that** the decision controller is further configured to, when preparing to exit the platform:
obtain a fused real-time vehicle position based on both real-time first positioning information provided by a perception system of the vehicle and real-time second positioning information provided by the platform;
obtain fused real-time environmental information around the vehicle based on both real-time first environmental information sensed by the perception system of the vehicle and real-time second environmental information provided by the platform;
determine whether exit platform conditions are met, including determining whether there is a physical object that hinders the vehicle from exiting the platform based on the fused real-time environmental information; and
in response to determining that the exit platform conditions are met, automatically control the vehicle to exit the platform based on both the fused real-time vehicle position and the fused real-time environmental information.

24. The vehicle of claim 23, **characterized in that** automatically controlling the vehicle to exit the platform further comprises:
calculating a route plan for the vehicle to exit the platform based on the fused real-time vehicle location and a designated exit platform spot of the platform;
performing corresponding vehicle driving actions according to the route plan; and
adjusting the route plan based on both the fused real-time vehicle position and the fused real-time environmental information.

25. The vehicle according to claim 24, **characterized in that** the route plan at least includes:
a vehicle driving route from a current position of the vehicle to a target parking position;
vehicle speed statuses associated with the vehicle driving route; and
vehicle driving actions associated with the vehicle driving route, wherein the vehicle driving actions include one or more of vehicle driving, braking, and steering.

26. The vehicle of claim 23, **characterized in that** decision controller is further configured to:
before the vehicle starts to exit the platform, determine whether to close the door based on both real-time information provided by the perception system of the vehicle and real-time information received from the platform.

27. The vehicle of claim 26, **characterized in that** decision controller is further configured to:
when it is determined based on the real-time information provided by the perception system of the vehicle and the real-time information received from the platform that there is no passenger on the vehicle ready to get off and no passenger at the platform ready to get on, and there is no passenger near the door for a predetermined time period, control the vehicle to automatically close the door.

28. The vehicle of claim 18 or 23, **characterized in that** the perception system comprise a satellite positioning device, and the first positioning information is vehicle positioning information provided by the satellite positioning device, and the second positioning information is distance information provided by an infrared signal detector of the platform indicating the distance between the vehicle and the platform.

29. The vehicle of claim 18, **characterized in that** determining the distance of the vehicle relative to the platform comprises calculating the distance of the vehicle relative to the platform based on the first positioning information and the position of the platform.

30. The vehicle of claim 18 or 23, wherein the physical object comprises at least one of the following:
motor vehicles, non-motor vehicles, pedestrians, animals, or stationary obstacles.

31. The vehicle of claim 17, **characterized in that** the perception system further comprises:
a forward millimeter wave radar;
a smart camera;
a Lidar; and
a lateral millimeter wave radar.

32. The vehicle according to claim 31, **characterized in that** the first environment information includes target-level fusion of the sensed signals provided by at least two of the forward millimeter wave radar, the smart camera, the Lidar, and the lateral millimeter wave radar.

33. A platform intelligent control system, **characterized in that** the platform intelligent control system includes:
a sensor system, the sensor system including at least a millimeter wave radar, a smart camera and a plurality of infrared signal detectors, wherein:
the signals sensed by the millimeter wave radar and the smart camera are fused at a target level to generate environmental information around the platform, and
the plurality of infrared signal detectors are installed at different positions in the platform, and are configured to provide vehicles going to enter and exit the platform with distance information indicating the distance between the vehicle and the platform; and
a platform intelligent controller communicatively coupled with the sensor system, the platform intelligent controller being configured to:
wirelessly communicate with the intelligent driving system of the vehicle to send the environmental information, the distance information, and the platform status information of the platform to the vehicle; and
wirelessly receive vehicle status information of the vehicle from the intelligent driving system of the vehicle.

34. The platform intelligent control system of claim 33, **characterized in that** the plurality of infrared signal detectors are installed at the platform equidistantly along a straight line.

35. The platform intelligent control system of claim 33, **characterized in that** the platform includes a platform door, and the platform intelligent controller is further configured to determine an automatic opening and closing of the platform door based on the platform status information and the vehicle status information.

36. The platform intelligent control system of claim 33, **characterized in that** the platform status information comprises at least one of the following:
door open conditions;
dangerous situations;
passengers conditions at the platform; and
platform fault conditions.

37. The platform intelligent control system of claim 33, **characterized in that** the vehicle status information comprises at least one of the following:
door open status of the vehicle;
vehicle enter platform reminders;
vehicle start reminders; and
vehicle exit platform reminders.

38. An intelligent driving vehicle control system, **characterized in that**, it includes:
the vehicle intelligent driving system according to any one of claims 17-32 installed on the vehicle; and
the platform intelligent control system according to any one of claims 33-37 installed at the platform,
wherein the vehicle intelligent driving system and the platform intelligent control system are configured to work in cooperation with each other to control the vehicle to automatically enter and exit the platform by executing the method according to any one of claims 1-16.
